Europäisches Patentamt

European Patent Office

Office européen des brevets

(19)

(11) **EP 0 665 186 B1**

(12) **FASCICULE DE BREVET EUROPEEN**

(45) Date de publication et mention
de la délivrance du brevet:
**30.07.1997 Bulletin 1997/31**

(51) Int. Cl.⁶: **C01B 25/45**, B01J 29/04

(21) Numéro de dépôt: **95400177.2**

(22) Date de dépôt: **26.01.1995**

(54) **Solides microporeux cristallisés consistant en aluminophosphates substitués par un métal et eventuellement par du silicium et appartenent au type structural fau, leurs synthèse et applications**

Kristalline, mikroporöse Feststoffe, bestehend aus durch ein Metall oder gegebenenfalls durch Silizium substituierten FAU-Aluminiumphosphaten, ihre Herstellung und Verwendung

Crystalline microporous solids consisting of FAU-type aluminium phosphates substituted with a metal or possibly with silicium, synthesis and application thereof

(84) Etats contractants désignés:
**AT BE CH DE DK ES GB GR IE IT LI LU NL PT SE**

(30) Priorité: **31.01.1994 FR 9401013**

(43) Date de publication de la demande:
**02.08.1995 Bulletin 1995/31**

(73) Titulaire: **ELF AQUITAINE**
**92400 Courbevoie (FR)**

(72) Inventeurs:
• **Sierra, Ligia**
**F-68350 Brunstatt (FR)**
• **Guth, Jean-Louis**
**F-68350 Brunstatt (FR)**
• **Patarin, Joel**
**F-68720 Flaxlanden (FR)**
• **des Courieres, Thierry**
**F-69007 Lyon (FR)**

(74) Mandataire: **Boillot, Marc**
**ELF AQUITAINE,**
**Division Propriété Industrielle,**
**Tour Elf**
**92078 Paris la Défense Cédex 45 (FR)**

(56) Documents cités:
**EP-A- 0 132 708       EP-A- 0 158 975**
**EP-A- 0 161 489**

**Description**

L'invention a trait à des solides microporeux cristallisés consistant en aluminophosphates substitués par un métal, notamment un métal divalent ou, par un métal, notamment un métal divalent, et du silicium et appartenant au type structural FAU. Elle se rapporte également à un procédé de synthèse de ces solides microporeux et concerne encore leur application en adsorption et catalyse.

Dans les solides microporeux cristallisés appartenant à la famille des aluminophosphates, la charpente est normalement neutre (rapport atomique $Al^{III}$:$P^V$ = 1). On peut rendre cette charpente négative et par là conférer à ces matériaux des propriétés intéressantes telles que l'adsorption, l'échange cationique, l'activité catalytique, en substituant à $P^V$ ou au couple $Al^{III}$, $P^V$ un élément tétravalent tel que le silicium, les matériaux obtenus étant désignés par l'acronyme SAPO, ou en substituant à $Al^{III}$ un métal, notamment un métal divalent tel que le zinc ou le cobalt, les matériaux obtenus étant désignés par l'acronyme MeAPO où Me est le métal, ou encore en combinant ces deux types de substitution, les matériaux obtenus étant désignés par l'acronyme MeAPSO.

Jusqu'à présent, seuls certains aluminophosphates substitués uniquement par du silicium et appelés SAPO-37 ont été décrits comme possédant le type structural FAU (EP-A-0103117).

La présente invention concerne de nouveaux solides microporeux cristallisés de structure FAU, qui renferment dans leur charpente $Al^{III}$, $P^V$ et en outre des métaux, notamment des métaux divalents (MeAPO-FAU) ou des métaux, notamment des métaux divalents, et du silicium (MeAPSO-FAU).

Des exemples de matériaux solides microporeux cristallisés MeAPO et MeAPSO, où Me désigne un métal tel que Zn ou Co, sont donnés, en particulier, dans la citation EP-A-0 132 708 pour les matériaux MeAPO et dans les citations EP-A-0 158 975 et EP-A-0 161 489 pour les matériaux MeAPSO. Toutefois ces matériaux ont des structures cristallines différentes de la structure FAU.

Les sigles structuraux FAU (FAUjasite) et AFR (Aluminophosphate FoRty), qui sont utilisés dans la présente invention, sont définis dans l'ouvrage de W.M. MEIER et D.H. OLSON intitulé "ATLAS OF ZEOLITE STRUCTURE TYPES" (Third Revised Edition, 1992, Butterworth-Heinemann), cet ouvrage donnant également la description de ces structures. La structure FAU des solides microporeux cristallisés MeAPO et MeAPSO selon l'invention existe aussi dans d'autres matériaux tels que les zéolithes du type aluminosilicate décrites dans la citation FR-A-2.638.444.

Les solides microporeux cristallisés selon l'invention sont des aluminophosphates substitués dans la charpente par un métal, notamment un métal divalent, Me (solides MeAPO) ou par un métal, notamment un métal divalent, Me et le silicium (solides MeAPSO). Comme les matériaux solides microporeux MeAPO et MeAPSO décrits dans les citations mentionnées plus haut, les solides microporeux MeAPO-FAU et MeAPSO-FAU selon l'invention présentent une structure cristalline tridimensionnelle formée par assemblage de motifs tétraédriques $TO_4$ avec T = Me,Al,P (solides MeAPO) ou de motifs tétraédriques $TO_4$ avec T = Me,Al,P et Si (solides MeAPSO) et la composition molaire de la charpente desdits solides, exprimée en oxyde, peut être définie par une formule brute, qui s'écrit $(Me_xAl_yP_z)O_2$ pour les solides MeAPO et $(Me_xAl_uP_vSi_w)O_2$ pour les solides MeAPSO et dans laquelle les symboles x, y, z, u, v et w représentent les teneurs molaires des éléments associés à ces symboles dans la formule de l'oxyde avec x+y+z = 1 et x+u+v+w = 1.

Les solides microporeux cristallisés selon l'invention se caractérisent en ce que, dans les formules de charpente $(Me_xAl_yP_z)O_2$ et $(Me_xAl_uP_vSi_w)O_2$, les symboles x, y, z, u, v et w sont tels que $0,001 \leq x \leq 0,15$, $0,34 \leq y \leq 0,51$, $0,49 \leq z \leq 0,51$, $0,30 \leq u \leq 0,51$, $0,30 \leq v \leq 0,51$ et $0,001 \leq w \leq 0,20$, et en ce qu'ils appartiennent au type structural FAU.

Dans les formules précitées, Me désigne au moins un métal choisi parmi les métaux pouvant adopter la coordination tétraédrique dans un oxyde, lesdits métaux étant en particulier des métaux divalents tels que Zn, Cu, Co, Ni, Mg et Mn.

Comme indiqué ci-dessus, les solides microporeux cristallisés selon l'invention appartiennent au type structural FAU, c'est-à-dire présentent une structure cristalline correspondant substantiellement à celle de la faujasite, qui possède comme il est bien connu une structure cristalline de symétrie cubique.

Les solides microporeux cristallisés MeAPO-FAU et MeAPSO-FAU sont synthétisés, comme les autres matériaux MeAPO et MeAPSO, en présence d'un agent structurant organique. Lorsqu'ils sont bruts de synthèse, lesdits solides contiennent, occlus dans leurs cavités, l'agent structurant organique utilisés pour leur synthèse, ainsi qu'une certaine quantité d'eau d'hydratation. La déshydratation desdits solides bruts de synthèse, par chauffage jusqu'à 150°C environ, ne provoque pas en général le départ de l'agent structurant.

La formule des solides microporeux cristallisés MeAPO-FAU ou MeAPSO-FAU bruts de synthèse peut donc s'écrire, à l'état déshydraté, $(S)_s:(Me_xAl_yP_z)O_2$ ou $(S)_s:(Me_xAl_uP_vSi_w)O_2$, où s est un nombre compris entre 0,06 et 0,2 et plus particulièrement entre 0,08 et 0,15 et représentant la quantité molaire de l'agent structurant S par mole de l'oxyde $(Me_xAl_yP_z)O_2$ ou $(Me_xAl_uP_vSi_w)O_2$.

La calcination de la forme brute de synthèse à une température suffisante pour éliminer l'agent structurant organique conduit à un solide microporeux cristallisé calciné ayant des pores ou cavités vides. La température de calcination est en général supérieure à 400°C et de préférence comprise entre 450°C et 550°C.

La caractérisation des produits selon l'invention, à savoir les solides microporeux cristallisés bruts de synthèse, encore appelés précurseurs, et les solides microporeux cristallisés à l'état calciné peut se faire par analyse chimique et surtout par analyse radiocristallographique conduisant au diagramme de diffraction des rayons X.

Ce diagramme de diffraction est obtenu au moyen d'un diffractomètre en utilisant la méthode classique des poudres avec le rayonnement $K\alpha$ du cuivre. Un étalon interne permet de déterminer précisément les valeurs des angles $2\theta$ associés aux pics de diffraction. Les différentes distances inter-réticulaires $d_{hkl}$, caractéristiques de l'échantillon, sont calculées à partir de la relation de BRAGG. L'estimation de l'erreur de mesure $\Delta(d_{hkl})$ sur $d_{hkl}$ se calcule, en fonction de l'erreur absolue $\Delta(2\theta)$, par la relation de BRAGG. En présence d'un étalon interne, cette erreur $\Delta(2\theta)$ est minimisée et prise couramment égale à $\pm$ 0,05°. L'intensité relative I/Io affectée à chaque valeur $d_{hkl}$ est estimée à partir de la hauteur du pic de diffraction correspondant.

Pour caractériser cette intensité relative, on utilise une échelle de symboles comme suit : FF = très forte, F = forte, mF = moyennement forte, m = moyenne, mf = moyennement faible, f = faible, ff = très faible.

Le tableau ci-après représente le diagramme de diffraction des rayons X caractéristique des précurseurs des solides microporeux cristallisés du type MeAPO-FAU et MeAPSO-FAU.

Dans la colonne des $d_{hkl}$, on a indiqué les valeurs moyennes des distances inter-réticulaires en Angströms (Å). Chacune de ces valeurs doit être affectée de l'erreur de mesure $\Delta(d_{hkl})$ comprise entre $\pm$0,2 et $\pm$0,008. Les différences qui peuvent être observées par rapport à ces valeurs moyennes sont essentiellement liées à la nature et à la quantité d'éléments Me présents dans les composés MeAPO-FAU avec en plus la quantité de l'élément Si présent dans les composés MeAPSO-FAU. Ces différences atteignent au maximum 0,15 Å pour des valeurs de $d_{hkl}$ proches de 14 Å et au maximum 0,03 Å pour des valeurs de $d_{hkl}$ proches de 3 Å. Les mêmes remarques s'appliquent aux intensités relatives I/Io.

Les diagrammes de diffraction des rayons X pour les solides microporeux cristallisés MeAPO-FAU et MeAPSO-FAU obtenus après calcination sont très semblables aux diagrammes précédents et les remarques concernant l'influence de la composition sur $d_{hkl}$ et I/Io s'appliquent également.

Tant les précurseurs MeAPO-FAU et MeAPSO-FAU que les solides calcinés correspondants présentent des diagrammes de diffraction des rayons X, qui correspondent substantiellement au diagramme du tableau.

TABLEAU

| Valeurs moyennes des $d_{hkl}$ et intensités relatives mesurées sur un diagramme de diffraction des rayons X obtenu avec les précurseurs des solides microporeux MeAPO-FAU et MEAPSO-FAU. | | |
|---|---|---|
| 2θ (degrés) | $d_{hkl}$ (Å) | I/Io |
| 6,17 | 14,3±0,2 | FF |
| 10,10 | 8,75 | m |
| 11,86 | 7,45±0,05 | f |
| 15,61 | 5,67 | F |
| 18,63 | 4,76 | mF |
| 20,30 | 4,37 | m |
| 21,24 | 4,18 | f |
| 22,72 | 3,91 | mf |
| 23,57 | 3,77 | F |
| 24,90 | 3,57 | ff |
| 25,70 | 3,464 | mf |
| 26,96 | 3,305 | mF |
| 27,68 | 3,220±0,008 | ff |
| 29,53 | 3,023 | mf |
| 30,63 | 2,917 | mf |
| 31,28 | 2,857 | m |
| 32,33 | 2,767 | f |
| 32,94 | 2,717 | ff |
| 33,95 | 2,638 | mf |
| 34,55 | 2,594 | f |

Un procédé de synthèse des solides microporeux cristallisés MeAPO-FAU et MeAPSO-FAU selon l'invention est du type consistant à préparer un mélange réactionnel appelé gel et renfermant de l'eau, une source de l'élément P, une source de l'élément Al, une source de l'élément Me pour les composés MeAPO avec en plus une source de l'élément Si pour les composés MeAPSO, des agents structurants organiques, un régulateur du pH du gel, les quantités desdits réactifs étant ajustées de manière à conférer à ce gel une composition permettant sa cristallisation en MeAPO ou MeAPSO, puis à maintenir le gel obtenu, à une température inférieure à 200°C et sous une pression au moins égale à la pression autogène du mélange constitué par ledit gel, pendant une durée suffisante pour effectuer la cristallisation de ce gel en un précurseur du solide microporeux consistant en ce solide microporeux emprisonnant l'agent structurant dans ses cavités, et, le cas échéant, à soumettre le précurseur à une calcination pour détruire l'agent structurant et produire la forme calcinée du solide microporeux, et il se caractérise en ce que les agents structurants consistent en un mélange de cations tétrapropylammonium (TPA) et de cations tétraméthylammonium (TMA) dans un rapport molaire TPA:TMA compris entre 3 et 50 et de préférence allant de 8 à 40.

Selon l'invention, le pH du gel est ajusté à une valeur comprise entre 6 et 8,5 et de préférence allant de 6,5 à 8. Avantageusement, cet ajustement du pH est réalisé en utilisant, à titre d'agent régulateur du pH, une base organique et tout spécialement l'hydroxyde de tétrapropylammonium (TPAOH) seul ou associé à l'hydroxyde de tétraméthylammonium (TMAOH).

La source de cations TPA consiste en TPAOH, généralement sous la forme d'une solution aqueuse, par exemple à 40 % en poids ou à 20 % en poids, seul ou associé à un halogénure de tétrapropylammonium (TPAX), par exemple chlorure ou bromure (X=Cl⁻ ou Br⁻).

La source de cations TMA est soit TMAOH, avantageusement sous la forme du solide $TMAOH.5H_2O$ ou d'une

solution aqueuse, par exemple solution à 20 % ou 25 % en poids, soit un halogénure de tétraméthylammonium (TMAX'), par exemple chlorure ou bromure (X'=Cl⁻ ou Br⁻) ou encore un mélange de TMAOH et de TMAX'.

La composition molaire, rapportée à $P_2O_5$, et les rapports molaires des réactifs dans le gel ont des valeurs plus particulièrement comprises dans les intervalles donnés ci-dessous.

|  | Domaine large | Domaine préféré |
|---|---|---|
| $P_2O_5$ | 1 | 1 |
| $Al_2O_3$ | 0,7-1,3 | 0,8-1,1 |
| MeO | 0,01-0,3 | 0,02-0,15 |
| $SiO_2$ (pour MeAPSO-FAU) | 0,01-0,6 | 0,05-0,4 |
| TPAOH | 1,2-2,0 | 1,3-1,6 |
| TPAOH+TPAX ($\Sigma$TPA) | 1,4-2,7 | 1,6-2,5 |
| TMAOH | 0-0,3 | 0-0,2 |
| TMAOH+TMAX'($\Sigma$TMA) | 0,03-0,3 | 0,05-0,2 |
| $\Sigma$TPA:$\Sigma$TMA | 3-50 | 8-40 |
| $H_2O$ | 50-120 | 55-100 |

La procédure de préparation du gel comporte plusieurs étapes de mélange séparées par des périodes d'agitation. De préférence, la procédure de préparation du gel est mise en oeuvre comme suit :

- <u>1ère étape de mélange</u> : mélange de la source de l'élément P avec la source de l'élément Al et de l'eau de manière à ce que le rapport pondéral de l'eau à la quantité des deux sources (P et Al) soit compris entre 0,7 et 1,3 ;
- <u>1ère période d'agitation</u> : durée se situant entre 1h et 30h et de préférence entre 2h et 24 h ;
- <u>2ème étape de mélange</u> : ajout de la source d'élément Me éventuellement dissoute dans la quantité minimale d'eau ;
- <u>2ème période d'agitation</u> : durée se situant entre 0,3h et 4h et de préférence entre 0,5h et 2h ;
- <u>3ème étape de mélange</u> : ajout d'un mélange contenant les sources de cations TPA et de cations TMA, éventuellement un complément d'eau, ainsi que, pour la préparation des composés MeAPSO, la source de l'élément Si ; et
- <u>3ème période d'agitation</u> : durée se situant entre 4h et 30h et de préférence entre 6h et 24h.

Avantageusement, la troisième période d'agitation peut être suivie d'une période de traitement aux ultrasons (sonication) de quelques heures, par exemple de 4 à 8heures, lequel traitement consiste à plonger le récipient contenant le gel dans une cuve à ultrasons.

La source de l'élément P la plus appropriée est l'acide phosphorique concentré, mais des dérivés organiques de l'acide phosphorique comme les esters phosphoriques tels que les phosphates de trialkyle conviennent également.

La source de l'élément Al peut être choisie parmi les oxydes, oxyhydroxydes et hydroxydes d'aluminium tels que la pseudo-boehmite AlOOH ou l'hydrargilite $Al(OH)_3$, mais des sels d'aluminium, notamment chlorure, nitrate, sulfate, ou des alkoxydes d'aluminium, tels que l'isopropoxyde d'aluminium $Al(O\text{-}isopropyl)_3$, sont également appropriés. On peut encore utiliser une source commune pour les éléments Al et P telle qu'un aluminophosphate.

La source du métal Me, métal devant pouvoir adopter la coordination tétraédrique dans un oxyde, peut être choisie parmi les sels, par exemple chlorure, nitrate, sulfate, acétate, les hydroxydes, les oxydes et les alkoxydes.

La source de l'élément silicium nécessaire pour la préparation des composés MeAPSO-FAU peut être une silice telle qu'un sol de silice, de la silice de combustion, de la silice précipitée, un alkoxyde de silicium et de façon générale tout composé de silicium pouvant libérer cet élément en solution aqueuse sous une forme réactive.

L'ajout de germes au gel avant son chauffage facilite généralement la cristallisation. Ces germes peuvent être obtenus par broyage de cristaux ayant la structure FAU et de préférence de cristaux contenant les éléments Al, P, Me et éventuellement Si.

Le chauffage du gel (mélange réactionnel) est réalisé de préférence dans un autoclave. La température de cristallisation est plus spécialement choisie entre 80°C et 200°C et de préférence entre 110°C et 150°C. La durée nécessaire pour obtenir la cristallisation dépend de la composition du gel, de la température de chauffage et de la présence ou non de germes. Ladite durée se situe généralement entre 12 heures et 5 jours.

La durée de cristallisation peut être réduite en faisant appel à l'une quelconque des méthodes couramment employées telles que l'ensemencement, comme mentionné précédemment, le recyclage des eaux-mères et la séparation des étapes de nucléation et de croissance. Lorsque la cristallisation est achevée, le solide précurseur obtenu est séparé des eaux-mères par centrifugation ou par filtration, puis lavé à l'eau déminéralisée et séché.

Lors de l'étape de calcination du solide précurseur pour le transformer en solide microporeux sous la forme calcinée, on le chauffe de préférence en présence d'un gaz contenant de préférence de l'oxygène moléculaire pour faciliter la destruction des cations organiques. La température de calcination est supérieure à 400°C et de préférence comprise entre 450°C et 550°C.

Les solides microporeux MeAPO-FAU et MeAPSO-FAU selon l'invention sont utilisables, à l'état calciné, comme adsorbants pour effectuer l'adsorption sélective de molécules dont les dimensions sont inférieures à 8Å, ou encore comme catalyseurs ou composants de catalyseurs utilisables dans les réactions de conversion catalytique de composés organiques et notamment de composés hydrocarbonés.

L'invention est illustrée par les exemples suivants donnés à titre non limitatif.

EXEMPLE 1 :

Synthèse d'un composé CoAPO-FAU

On dispersait 1,6 g de pseudo-boehmite dans une solution contenant 2,94 g d'acide phosphorique à 85 % et 4,48 g d'eau. Ce mélange était agité pendant une durée $T_1$ égale à 6heures à l'aide d'un barreau magnétique. On ajoutait ensuite audit mélange une solution formée de 0,32 g d'acétate de cobalt de formule $Co(CH_3COO)_2.4H_2O$ et de 1,85 g d'eau. Le nouveau mélange obtenu était agité pendant une durée $T_2$ égale à 1,5 heure, puis on le complétait en y ajoutant une solution constituée de 10,41 g d'hydroxyde de tétrapropylammonium (TPAOH) à 40 % dans l'eau, 3,12 g de bromure de tétrapropylammonium (TPABr), 0,14 g d'hydroxyde de tétraméthylammonium (TMAOH) pentahydrate et 1,01 g d'eau. Le milieu réactionnel ainsi formé, ayant la consistance d'un gel, était mûri sous agitation pendant une durée $T_3$ égale à 14 heures, puis soumis à une sonication (récipient bouché) contenant le gel placé dans une cuve à ultrasons) pendant une durée $T_4$ égale à 6 heures.

La composition molaire du gel (milieu réactionnel ainsi préparé, exprimée en oxyde et rapportée à 1 mole de $P_2O_5$, était la suivante :

$P_2O_5$ ; $0,95Al_2O_3$; $0,1CoO$ ; $1,60TPAOH$ ; $0,92TPABr$ ; $0,06TMAOH$ ; $62,4H_2O$

Après transfert dans un autoclave de 60 ml revêtu intérieurement de polytétrafluoroéthylène (PTFE), le gel était chauffé sans agitation à 120°C pendant une durée T5 égale à 78 heures pour former un produit cristallisé. Après refroidissement, le solide cristallisé obtenu était séparé et purifié par centrifugation et lavage à l'eau déminéralisée. Après séchage à 60°C, on obtenait 1,6 g de produit.

Les valeurs de $d_{hkl}$ et I/Io des raies du diagramme de diffraction des rayons X de ce produit correspondent aux valeurs du tableau et permettent d'identifier ce produit à un composé CoAPO-FAU. Le produit contient l'impureté CoAPO-AFR dont la présence est révélée par des raies faibles sur le diagramme de diffraction. Après calcination à l'air à 500°C, pendant 4 heures, le produit garde la structure de type FAU. L'analyse chimique du produit calciné déshydraté, exprimée selon la formule brute $(Me_xAl_yP_z)O_2$, est la suivante : $(Co_{0,08}Al_{0,42}P_{0,5})O_2$.

Le produit brut de synthèse renfermait, après déshydratation à 150°C, une proportion d'agent structurant (cations TPA + cations TMA) dans ses pores et cavités représentant 0,11 mole par mole de $(Co_{0,08}Al_{0,42}P_{0,5})O_2$. La formule du produit brut de synthèse, dans sa forme déshydratée, s'écrit : $(S)_{0,11}(Co_{0,08}Al_{0,42}P_{0,5})O_2$ avec S = TPA+TMA dans un rapport molaire TPA:TMA=1,3.

EXEMPLE 2 :

Synthèse d'un composé CoAPO-FAU avec utilisation de germes.

On préparait un gel en suivant la procédure décrite dans l'exemple 1 et en opérant avec les quantités de réactifs et les durées suivantes :

6

| Réactifs | | Durées |
|---|---|---|
| Pseudo-boehmite | 1,62 g | |
| $H_3PO_4$ à 85 % | 2,98 g | |
| $H_2O$ | 4,28 g | |
| | | $T_1$ = 24 heures |
| $Co(CH_3COO)_2.4H_2O$ | 0,26 g | |
| $H_2O$ | 1 g | |
| | | $T_2$ = 3 heures |
| TPAOH à 40 % | 9,19 g | |
| TPABr | 0,82 g | |
| $TMAOH.5H_2O$ | 0,37 g | |
| $H_2O$ | 1,22 g | |
| | | $T_3$ = 22 heures |
| | | $T_4$ = 5 heures |

Après la phase de sonication, on ajoutait au milieu réactionnel 40 mg de germes provenant du broyage de cristaux CoAPO-FAU d'une synthèse précédente.

La composition molaire du gel ainsi préparé, exprimée en oxyde et rapportée à 1 mole de $P_2O_5$, était la suivante : $P_2O_5$ ; $0,95Al_2O_3$ ; 0,08Co ; 1,40TPAOH ; 0,24TPABr ; 0,16TMAOH ; $60H_2O$

Après cristallisation du gel (en autoclave gainé intérieurement de PTFE) par chauffage à 120°C pendant une durée $T_5$ égale à 53 heures, on séparait le solide cristallisé par centrifugation, puis purifiait ledit solide par lavage à l'eau déminéralisée.

Après séchage à 60°C, on recueillait 1,75 g d'un produit, dont le diagramme de diffraction des rayons X, comparable à celui du tableau, permet de l'identifier à une phase CoAPO-FAU. Le produit calciné à 500°C est stable.

La composition chimique du produit calciné déshydraté, ramenée à l'unité formulaire $(Me_xAl_yP_z)O_2$, s'écrit $(Co_{0,06}Al_{0,44}P_{0,5})O_2$.

Dans le produit brut de synthèse (avant calcination), le nombre de mole d'agent structurant, ramené à l'unité formulaire précitée, est égal à 0,12.

La formule du produit brut de synthèse, dans sa forme déshydratée, s'écrit $(S)_{0,12}(Co_{0,06}Al_{0,44}P_{0,5})O_2$ avec S = TPA+TMA dans un rapport molaire TPA:TMA = 1,2.

EXEMPLE 3

Synthèse d'un composé ZnAPO-FAU

On préparait un gel en suivant la procédure décrite dans l'exemple 1, en remplaçant toutefois la solution de TPAOH à 40 % par une solution à 20 % et en utilisant l'acétate de zinc à la place de l'acétate de cobalt.

Les quantités de réactifs et les durées utilisées étaient les suivantes :

| Réactifs | | Durées |
|---|---|---|
| Pseudo-boehmite | 1,62 g | |
| $H_3PO_4$ à 85 % | 2,98 g | |
| $H_2O$ | 4,06 g | |
| | | $T_1$ = 24 heures |
| $Zn(CH_3COO)_2.2H2O$ | 0,30 g | |
| | | $T_2$ = 2 heures |
| TPAOH à 20 % | 20,69 g | |
| TPABr | 0,82 g | |
| $TMAOH.5H_2O$ | 0,14 g | |
| | | $T_3$ = 18 heures |
| | | $T_4$ = 6 heures |

Après sonication, on ajoutait 40 mg de germes provenant du broyage de cristaux ZnAPO-FAU issus d'une synthèse précédente.

La composition molaire du gel ainsi préparé, rapportée à une mole de $P_2O_5$, était la suivante : $P_2O_5$; $0,95Al_2O_3$; $0,10ZnO$ ; $1,58TPAOH$ ; $0,24TPABr$ ; $0,06TMAOH$ ; $96,6H_2O$.

Après cristallisation du gel (en autoclave gainé intérieurement de PTFE) par chauffage à 150°C pendant 48 heures ($T_5$), on séparait le solide cristallisé par centrifugation, puis purifiait ledit solide par lavage à l'eau déminéralisée. Après séchage à 60°C, on recueillait 1,5 g d'un produit, dont le diagramme de diffraction des rayons X, comparable à celui du tableau, permet de l'identifier à une phase ZnAPO-FAU. Le produit calciné à 500°C est stable.

La composition chimique du produit calciné déshydraté, ramenée à l'unité formulaire $(Me_xAl_yP_z)O_2$, s'écrit $(Zn_{0,08}Al_{0,42}P_{0,5})O_2$.

Dans le produit brut de synthèse (avant calcination), le nombre de mole d'agent structurant, ramené à l'unité formulaire ci-dessus, est égal à 0,12.

La formule du produit brut de synthèse, dans sa forme déshydratée, s'écrit $(S)_{0,12}(Zn_{0,08}Al_{0,42}P_{0,5})O_2$ avec S=TPA+TMA dans un rapport molaire TPA:TMA=1,2.

EXEMPLE 4 (Témoin)

On préparait un gel en suivant la procédure décrite dans l'exemple 1, ledit gel ayant une composition se rapprochant de celle de l'exemple 2, mais ne renfermant pas de composé du cobalt.

Les quantités de réactifs et les durées utilisées étaient les suivantes :

| Réactifs | | Durées |
|---|---|---|
| Pseudo-boehmite | 0,86 g | |
| $H_3PO_4$ à 85 % | 1,49 g | |
| $H_2O$ | 2,28 g | |
| | | $T_1$ = 7 heures |
| TPAOH à 40 % | 4,7 g | |
| TPABr | 0,89 g | |
| TMAOH à 25 % | 0,21 g | |
| $H_2O$ | 2,6 g | |
| | | $T_3$ = 17 heures |

La composition molaire du gel ainsi préparé, rapportée à une mole de $P_2O_5$, était la suivante : $P_2O_5$ ; $1Al_2O_3$ ; 1,42TPAOH ; 0,52TPABr ; 0,09TMAOH ; $75H_2O$

La cristallisation du gel ($T_5$ = 23 heures à 150°C), la séparation, le lavage et le séchage du solide résultant ont été effectués selon la procédure décrite dans l'exemple 1.

Par analyse radiocristallographique, on a identifié une phase du type $AlPO_4$-AFR. Il apparaît donc que l'absence du métal Me, dans cet exemple le cobalt, empêche la cristallisation de la phase avec la structure FAU.

EXEMPLE 5

Synthèse d'un composé ZnAPSO-FAU

On préparait un gel en suivant la procédure décrite dans l'exemple 1, en incorporant au plus une source de l'élément silicium et en utilisant l'acétate de zinc comme source de zinc constituant le métal Me.

Les quantités de réactifs et les durées utilisées étaient les suivantes :

| Réactifs | | Durées |
|---|---|---|
| Pseudo-boehmite | 0,8 g | |
| $H_3PO_4$ à 85 % | 1,47 g | |
| $H_2O$ | 2,27 g | |
| | | $T_1$ = 6 heures |
| $Zn(CH_3COO)_2.2H_2O$ | 0,15 g | |
| $H_2O$ | 1,22 g | |
| | | $T_2$ = 2 heures |
| TPAOH à 40 % | 5,09 g | |
| TPABr | 0,9 g | |
| $TMAOH.5H_2O$ | 0,11 g | |
| $SiO_2$(Cab-O-Sil [R]) | 0,18 g | |
| $H_2O$ | 1,47 g | |
| | | $T_3$ = 22 heures |

La composition molaire du gel ainsi préparé, rapportée à une mole de $P_2O_5$, était la suivante :
$P_2O_5$; $0,95Al_2O_3$; 0,10ZnO; $0,47SiO_2$; 1,57TPAOH; 0,53TPABr; 0,10TMAOH; $78H_2O$

La cristallisation du gel ($T_5$=67 heures à 120°C), la séparation, le lavage et le séchage du solide résultant ont été effectués selon la procédure décrite dans l'exemple 1.

Par analyse radiocristallographique, on identifie une phase du type MeAPSO-FAU avec du gel et de la pseudo-boehmite. La présence de silice rend la cristallisation du gel plus difficile.

EXEMPLE 6

Synthèse d'un composé ZnAPSO-FAU

On préparait un gel en suivant la procédure décrite dans l'exemple 1, avec les quantités de réactifs et les durées utilisées dans l'exemple 5, sauf que la quantité de silice Cab-O-Sil ® introduite a été divisée par deux et que 20 mg de germes, provenant du broyage de cristaux de ZnAPO-FAU, ont été incorporés au gel avant sa cristallisation.

La composition molaire du gel ainsi préparé, rapportée à une mole de $P_2O_5$, était la suivante :
$P_2O_5$; $0,95Al_2O_3$; 0,10ZnO; $0,23SiO_2$; 1,57TPAOH; 0,53TPABr; 0,10TMAOH; $78H_2O$

La cristallisation du gel ($T_5$=52 heures à 120°C), la séparation, le lavage et le séchage du solide résultant ont été effectués selon la procédure décrite dans l'exemple 1.

Par analyse radiocristallographique, on identifie une phase du type MeAPSO-FAU. Le produit calciné à 500°C est stable.

La composition chimique du produit calciné, à l'état déshydraté, est la suivante : $(Zn_{0,08}Al_{0,40}P_{0,42}Si_{0,1})O_2$.

Dans la forme brute de synthèse (avant calcination), le nombre de mole d'agent structurant, ramené à l'unité formulaire $(Me_xAl_uP_vSi_w)O_2$, est égal à 0,14.

La formule du produit brut de synthèse, dans sa forme déshydratée, s'écrit

$$(S)_{0,14}(Zn_{0,08}Al_{0,40}P_{0,42}Si_{0,1})O_2$$

avec S = TPA+TMA dans un rapport molaire TPA:TMA=1,2.

EXEMPLE 7

Synthèse d'un composé ZnAPSO-FAU à faible teneur en Zn

Cet exemple illustre la possibilité de préparer un composé du type MeAPSO-FAU avec des teneurs très faibles en métal Me, consistant dans ce cas en Zn.

La quantité d'acétate de zinc introduite était égale à 0,03 g. Pour le reste, on opérait d'une manière comparable à celle décrite dans l'exemple 6.

La composition molaire du gel ainsi préparé, rapportée à 1 mole de $P_2O_5$, était la suivante :

$P_2O_5$; $0,95Al_2O_3$; $0,02ZnO$; $0,23SiO_2$; $1,6TPAOH$; $0,52TPABr$; $0,1TMAOH$; $80H_2O$

Au mélange réactionnel sont ajoutés 20 mg de cristaux broyés de ZnAPO-FAU, après quoi l'ensemble est chauffé à 120°C pendant 50 heures ($T_5$). Après sonication, on récupère 0,8 g de solide que l'on identifie, par son diagramme de rayons X, à une phase du type MeAPSO-FAU.

La composition chimique du produit calciné, à l'état déshydraté, est la suivante :

$(Zn_{0,02}Al_{0,45}P_{0,41}Si_{0,12})O_2$.

Dans la forme brute de synthèse (avant calcination), le nombre de mole d'agent structurant, ramené à l'unité formulaire $(Me_xAl_uP_vSi_w)O_2$, est égal à 0,12.

La formule du produit brut de synthèse, dans sa forme déshydratée, s'écrit

$$(S)_{0,12}(Zn_{0,02}Al_{0,45}P_{0,41}Si_{0,12})O_2$$

avec S = TPA+TMA dans un rapport molaire TPA:TMA = 1,3.

**Revendications**

1. Solides microporeux cristallisés consistant en aluminophosphates substitués dans la charpente par un métal Me (solides MeAPO) ou par un métal Me et le silicium (solides MeAPSO), du type présentant une composition molaire de leur charpente qui, exprimée en oxyde, est définie par une formule brute s'écrivant $(Me_xAl_yP_z)O_2$ pour les solides MeAPO et $(Me_xAl_uP_vSi_w)O_2$ pour les solides MeAPSO avec les symboles x, y, z, u, v et w représentant les teneurs molaires des éléments associés à ces symboles dans la formule correspondante de l'oxyde avec x+y+z=1 et x+u+v+w=1 , lesdits solides se caractérisant en ce qu'ils appartiennent au type structural FAU et en ce que dans lesdites formules de charpente $(Me_xAl_yP_z)O_2$ et $(Me_xAl_uP_vSi_w)O_2$, les symboles x, y, z, u, v et w sont tels que $0,001 \leq x \leq 0,15$, $0,34 \leq y \leq 0,51$, $0,49 \leq z \leq 0,51$, $0,30 \leq u \leq 0,51$, $0,30 \leq v \leq 0,51$ et $0,001 \leq w \leq 0,20$.

2. Solides selon la revendication 1, caractérisés en ce que le métal Me désigne au moins un métal choisi parmi les métaux pouvant adopter la coordination tétraédrique dans un oxyde, lesdits métaux étant en particulier des métaux divalents tels que Zn, Cu, Co, Ni, Mg et Mn.

3. Solides selon la revendication 1 ou 2, caractérisés en ce qu'ils se présentent à l'état calciné.

4. Solides selon la revendication 1 ou 2, caractérisés en ce qu'ils sont bruts de synthèse et présentent, à l'état déshydraté, une formule s'écrivant $(S)_s : (Me_xAl_yP_z)O_2$ ou $(S)_s : (Me_xAl_uP_vSi_w)O_2$ où S est un agent structurant organique et s est un nombre compris entre 0,06 et 0,2 et plus particulièrement entre 0,08 et 0,15 et représentant la quantité molaire de l'agent structurant S par mole de l'oxyde $(Me_xAl_yP_z)O_2$ ou $(Me_xAl_uP_vSi_w)O_2$.

5. Solides selon la revendication 4, caractérisés en ce que l'agent structurant S est un mélange de cations tétrapropylammonium et de cations tétraméthylammonium.

6. Solides selon l'une des revendications 1 à 5, caractérisés en ce qu'ils présentent des diagrammes de diffraction des rayons X, qui correspondent substantiellement au diagramme présenté dans le tableau donné dans la description.

7. Procédé de synthèse des solides microporeux cristallisés selon la revendication 1 ou 2, du type consistant à préparer un mélange réactionnel appelé gel et renfermant de l'eau, une source de l'élément P, une source de l'élément Al, une source de l'élément Me pour les composés MeAPO avec en plus une source de l'élément silicium pour les composés MeAPSO, des agents structurants organiques, un régulateur du pH du gel, les quantités desdits réactifs étant ajustées de manière à conférer à ce gel une composition permettant sa cristallisation en MeAPO ou MeAPSO, puis à maintenir le gel obtenu, à une température inférieure à 200°C et sous une pression au moins égale à la pression autogène du mélange constitué par ledit gel, pendant une durée suffisante pour effectuer la cristallisation de ce gel en un précurseur du solide microporeux consistant en ce solide microporeux emprisonnant l'agent structurant dans ses cavités et, le cas échéant, à soumettre le précurseur à une calcination pour détruire l'agent structurant et produire la forme calcinée du solide microporeux, ledit procédé se caractérisant en ce que les agents structurants consistent en un mélange de cations tétrapropylammonium (TPA) et de cations tétraméthylammonium (TMA) dans un rapport molaire TPA:TMA compris entre 3 et 50.

8. Procédé selon la revendication 7, caractérisé en ce que dans le mélange formant l'agent structurant le rapport molaire des cations TPA aux cations TMA va de 8 à 40.

9. Procédé selon la revendication 7 ou 8, caractérisé en ce que le pH du milieu réactionnel ou gel est ajusté à une valeur comprise entre 6 et 8,5 et de préférence allant de 6,5 à 8.

10. Procédé selon la revendication 9 caractérisé en ce que l'agent régulateur du pH est une base organique et tout spécialement l'hydroxyde de tétrapropylammonium (TPAOH) seul ou associé à l'hydroxyde de tétraméthylammonium (TMAOH).

11. Procédé selon l'une des revendications 7 à 10, caractérisé en ce que la source de cations TPA consiste en hydroxyde de tétrapropylammonium seul ou associé à un halogénure de tétrapropylammonium (TPAX).

12. Procédé selon l'une des revendications 7 à 11, caractérisé en ce que la source de cations TMA est soit TMAOH, soit un halogénure de tétraméthylammonium (TMAX') ou encore un mélange de TMAOH et de TMAX'.

13. Procédé selon les revendications 11 et 12, caractérisé en ce que la composition molaire, rapportée à $P_2O_5$, et les rapports molaires des réactifs dans le gel ont des valeurs comprises dans les intervalles ci-après :

|  | Domaine large | Domaine préféré |
|---|---|---|
| $P_2O_5$ | 1 | 1 |
| $Al_2O_3$ | 0,7-1,3 | 0,8-1,1 |
| MeO | 0,01-0,3 | 0,02-0,15 |
| $SiO_2$ (pour MeAPSO) | 0,01-0,6 | 0,05-0,4 |
| TPAOH | 1,2-2,0 | 1,3-1,6 |
| TPAOH+TPAX($\Sigma$TPA) | 1,4-2,7 | 1,6-2,5 |
| TMAOH | 0-0,3 | 0-0,2 |
| TMAOH+TMAX'($\Sigma$TMA) | 0,03-0,3 | 0,05-0,2 |
| $\Sigma$TPA : $\Sigma$TMA | 3-50 | 8-40 |
| $H_2O$ | 50-120 | 55-100 |

14. Procédé selon la revendication 13, caractérisé en ce que la préparation du gel comporte les étapes successives suivantes :

- une première étape de mélange consistant à mélanger la source de l'élément P avec la source de l'élément Al et de l'eau de manière à ce que le rapport pondéral de l'eau à la quantité des deux sources (P et Al) soit compris entre 0,7 et 1,3 ;
- une première période d'agitation du mélange résultant, dont la durée se situe entre 1h et 30h et de préférence entre 2h et 24h ;
- une deuxième étape de mélange au cours de laquelle on incorpore la source d'élément Me, éventuellement dissoute dans la quantité minimale d'eau ;
- une deuxième étape d'agitation, dont la durée se situe entre 0,3h et 4h et de préférence entre 0,5h et 2h ;
- une troisième étape de mélange au cours de laquelle on incorpore au milieu réactionnel les sources de cations TPA et de cations TMA, éventuellement un complément d'eau, ainsi que, pour la préparation des composés MeAPSO, la source de l'élément Si ; et
- une troisième période d'agitation, dont la durée se situe entre 4h et 30h et de préférence entre 6h et 24h.

15. Procédé selon la revendication 14, caractérisé en ce que le milieu réactionnel ou gel, après la troisième période d'agitation, est soumis à une période de traitement aux ultra-sons.

16. Procédé selon l'une des revendications 7 à 15, caractérisé en ce que la source de l'élément P consiste en acide phosphorique ou en un ester phosphorique.

17. Procédé selon l'une des revendications 7 à 16, caractérisé en ce que la source de l'élément Al est choisie parmi oxydes, oxyhydroxydes et hydroxydes d'aluminium, les sels d'aluminium et les alkoxydes d'aluminium.

18. Procédé selon les revendications 16 et 17, caractérisé en ce que l'on utilise une source commune pour les éléments P et Al, notamment un aluminophosphate.

19. Procédé selon l'une des revendications 7 à 18, caractérisé en ce que la source du métal Me est choisie parmi les sels, hydroxydes, oxydes et alkoxydes dudit métal.

20. Procédé selon l'une des revendications 7 à 19, caractérisé en ce que la source de silicium, utilisée pour la préparation des composés MeAPSO, est une silice telle qu'un sol de silice, de la silice de combustion, de la silice précipitée ou un alkoxyde de silicium.

21. Procédé selon l'une des revendications 7 à 20, caractérisé en ce que l'on ajoute des germes au gel avant l'étape de cristallisation.

22. Procédé selon l'une des revendications 7 à 21, caractérisé en ce que la température de cristallisation est choisie entre 80°C et 200°C et de préférence entre 110°C et 150°C.

23. Procédé selon l'une des revendications 7 à 22, caractérisé en ce que la durée de la cristallisation est située entre 12 heures et 5 jours.

24. Procédé selon l'une des revendications 7 à 23, caractérisé en ce que le solide microporeux précurseur cristallisé est soumis à une calcination à température supérieure à 400°C et de préférence comprise entre 450°C et 550°C, ladite calcination étant de préférence effectuée en présence d'un gaz.

25. Procédé selon la revendication 24, caractérisé en ce que ledit gaz renferme de l'oxygène moléculaire.

26. Application des solides microporeux cristallisés calcinés selon la revendication 3 comme adsorbants, pour effectuer l'adsorption sélective de molécules dont les dimensions sont inférieures à 8Å, ou encore comme catalyseurs ou composants de catalyseurs utilisables dans les réactions de conversion catalytique de composés organiques et notamment de composés hydrocarbonés.

**Claims**

1. Crystallised microporous solids comprising aluminophosphates substituted in the skeleton by a metal Me (MeAPO solids) or by a metal Me and silicon (MeAPSO solids), of the type having a molar composition of their skeleton which, expressed as oxide, is defined by a total formula written $(Me_xAl_yP_z)O_2$ for MeAPO solids and $(Me_xAl_uP_vSi_w)O_2$ for MeAPSO solids with the symbols x, y, z, u, v and w representing the molar contents of the elements associated with those symbols in the corresponding formula of the oxide with x+y+z=1 and x+u+v+w=1 , the solids being characterised in that they belong to the structural type FAU and in that, in the structural formulae $(Me_xAl_yP_z)O_2$ and $(Me_xAl_uP_vSi_w)O_2$, the symbols x, y, z, u, v and w are such that $0.001 \leq x \leq 0.15$, $0.34 \leq y \leq 0.51$, $0.49 \leq z \leq 0.51$, $0.30 \leq u \leq 0.51$, $0.30 \leq v \leq 0.51$ and $0.001 \leq w \leq 0.20$.

2. Solids according to Claim 1, characterised in that the metal Me denotes at least one metal selected from metals able to adopt the tetrahedric coordination in an oxide, said metals being, especially, divalent metals such as Zn, Cu, Co, Ni, Mg and Mn.

3. Solids according to Claim 1 or 2, characterised in that they are in the calcined state.

4. Solids according to Claim 1 or 2, characterised in that they are as synthesised and have, in the dehydrated state, a formula written $(S)_s$: $(Me_xAl_yP_z)O_2$ or $(S)_s$: $(Me_xAl_uP_vSi_w)O_2$ where S is an organic structuring agent and s is a number between 0.06 and 0.2, more especially between 0.08 and 0.15, and represents the molar amount of the structuring agent S per mole of the oxide $(Me_xAl_yP_z)O_2$ or $(Me_xAl_uP_vSi_w)O_2$.

5. Solids according to Claim 4, characterised in that the structuring agent S is a mixture of tetrapropylammonium cations and tetramethylammonium cations.

6. Solids according to any one of Claims 1 to 5, characterised in that they have X-ray diffraction patterns which correspond substantially to the pattern presented in the table given in the description.

7. Process for the synthesis of the crystallised microporous solids according to Claim 1 or 2, of the type consisting in preparing a reaction mixture called a gel and containing water, a source of the element P, a source of the element Al, a source of the element Me for the MeAPO compounds with, in addition, a source of the element silicon for the MeAPSO compounds, organic structuring agents, a regulator of the pH of the gel, the amounts of the reagents being adjusted in such a manner as to confer on that gel a composition permitting its crystallisation into MeAPO or MeAPSO, then in maintaining the resulting gel, at a temperature lower than 200°C and under a pressure at least equal to the autogenous pressure of the mixture constituted by the gel, for a period sufficient to effect the crystallisation of the gel into a precursor of the microporous solid comprising that microporous solid trapping the structuring agent in its cavities and, where appropriate, in subjecting the precursor to calcination in order to destroy the structuring agent and to produce the calcined form of the microporous solid, the process being characterised in that the structuring agents comprise a mixture of tetrapropylammonium (TPA) cations and tetramethylammonium (TMA) cations in a molar ratio TPA:TMA of between 3 and 50.

8. Process according to Claim 7, characterised in that, in the mixture forming the structuring agent, the molar ratio of the TPA cations to the TMA cations is from 8 to 40.

9. Process according to Claim 7 or 8, characterised in that the pH of the reaction medium or gel is adjusted to a value of between 6 and 8.5 and preferably from 6.5 to 8.

10. Process according to Claim 9, characterised in that the agent regulating the pH is an organic base, especially tetrapropylammonium hydroxide (TPAOH) alone or associated with tetramethylammonium hydroxide (TMAOH).

11. Process according to any one of Claims 7 to 10, characterised in that the source of TPA cations comprises tetrapropylammonium hydroxide alone or associated with a tetrapropylammonium halide (TPAX).

12. Process according to any one of Claims 7 to 11, characterised in that the source of TMA cations is either TMAOH or a tetramethylammonium halide (TMAX') or a mixture of TMAOH and TMAX'.

13. Process according to Claims 11 and 12, characterised in that the molar composition, relative to $P_2O_5$, and the molar ratios of the reagents in the gel have values in the following ranges:

|  | Broad range | Preferred range |
|---|---|---|
| $P_2O_5$ | 1 | 1 |
| $Al_2O_3$ | 0.7-1.3 | 0.8-1.1 |
| MeO | 0.01-0.3 | 0.02-0.15 |
| $SiO_2$ (for MeAPSO) | 0.01-0.6 | 0.05-0.4 |
| TPAOH | 1.2-2.0 | 1.3-1.6 |
| TPAOH+TPAX ($\Sigma$TPA) | 1.4-2.7 | 1.6-2.5 |
| TMAOH | 0-0.3 | 0-0.2 |
| TMAOH+TMAX' ($\Sigma$TMA) | 0.03-0.3 | 0.05-0.2 |
| $\Sigma$TPA : $\Sigma$TMA | 3-50 | 8-40 |
| $H_2O$ | 50-120 | 55-100 |

**14.** Process according to Claim 13, characterised in that the preparation of the gel comprises the following consecutive steps:

- a first mixing step comprising mixing the source of the element P with the source of the element Al and water in such a manner that the ratio by weight of the water to the amount of the two sources (P and Al) is between 0.7 and 1.3;
- a first period of agitation of the resulting mixture, of which the duration is between 1 hour and 30 hours and preferably between 2 hours and 24 hours;
- a second mixing step in the course of which the source of the element Me, optionally dissolved in the minimum amount of water, is incorporated;
- a second agitating step of which the duration is between 0.3 hour and 4 hours and preferably between 0.5 hour and 2 hours;
- a third mixing step in the course of which the sources of TPA cations and TMA cations, optionally a balance of water, and also, for the preparation of the MeAPSO compounds, the source of the element Si are incorporated in the reaction medium; and
- a third agitation period of which the duration is between 4 hours and 30 hours and preferably between 6 hours and 24 hours.

**15.** Process according to Claim 14, characterised in that the reaction medium or gel, after the third agitation period, is subjected to a period of ultrasound treatment.

**16.** Process according to any one of Claims 7 to 15, characterised in that the source of the element P is phosphoric acid or a phosphoric ester.

**17.** Process according to any one of Claims 7 to 16, characterised in that the source of the element Al is selected from aluminium oxides, oxyhydroxides and hydroxides, aluminium salts and aluminium alkoxides.

**18.** Process according to Claims 16 and 17, characterised in that a common source is used for the elements P and Al, especially an aluminophosphate.

**19.** Process according to any one of Claims 7 to 18, characterised in that the source of the metal Me is selected from the salts, hydroxides, oxides and alkoxides of said metal.

**20.** Process according to any one of Claims 7 to 19, characterised in that the silicon source, used for the preparation of the MeAPSO compounds, is a silica such as a sol of silica, of combustion silica, of precipitated silica, or a silicon alkoxide.

**21.** Process according to any one of Claims 7 to 20, characterised in that seeds are added to the gel before the crystallisation step.

22. Process according to any one of Claims 7 to 21, characterised in that the crystallisation temperature is selected between 80°C and 200°C and preferably between 110°C and 150°C.

23. Process according to any one of Claims 7 to 22, characterised in that the duration of crystallisation is between 12 hours and 5 days.

24. Process according to any one of Claims 7 to 23, characterised in that the crystallised precursor microporous solid is subjected to calcination at a temperature higher than 400°C and preferably between 450°C and 550°C, the calcination preferably being carried out in the presence of a gas.

25. Process according to Claim 24, characterised in that the gas contains molecular oxygen.

26. Application of the calcined crystallised microporous solids according to Claim 3 as adsorbents, for effecting the selective adsorption of molecules of which the dimensions are smaller than 8Å, or as catalysts or components of catalysts usable in reactions for the catalytic conversion of organic compounds and especially hydrocarbon compounds.

**Patentansprüche**

1. Kristallisierte mikroporöse Feststoffe, die aus Alumophosphaten bestehen, die im Gerüst durch ein Metall Me (Feststoffe MeAPO) oder durch ein Metall und Silicium (Feststoffe MeAPSO) substituiert sind, die eine molare Zusammensetzung ihres Gerüsts aufweisen, die, ausgedrückt als Oxid, durch die Summenformel $(Me_xAl_yP_z)O_2$ für die Feststoffe MeAPO und $(Me_xAl_uP_vSi_w)O_2$ für die Feststoffe MeAPSO definiert ist, wobei die Symbole x, y, z, u, v und w den Molargehalt der diesen Symbolen zugeordneten Elemente in der entsprechenden Formel des Oxids bei x+y+z=1 und x+u+v+w=1 bedeuten, dadurch **gekennzeichnet**, daß diese Feststoffe dem Strukturtyp FAU angehören und in den Formeln des Gerüsts $(Me_xAl_yP_z)O_2$ und $(Me_xAl_uP_vSi_w)O_2$, die Symbole x, y, z, u, v und w die Werte $0,001 \leq x \leq 0,15$, $0,34 \leq y \leq 0,51$, $0,49 \leq z \leq 0,51$, $0,30 \leq u \leq 0,51$, $0,30 \leq v \leq 0,51$ und $0,001 \leq x \leq 0,20$ aufweisen.

2. Feststoffe nach Anspruch 1, dadurch **gekennzeichnet**, daß das Metall Me wenigstens ein Metall bedeutet, ausgewählt unter den Metallen, welche in einem Oxid die Tetraederkoordination annehmen können, wobei die Metalle insbesondere zweiwertige Metalle wie Zn, Cu, Co, Ni, Mg und Mn sind.

3. Feststoffe nach Anspruch 1 oder 2, dadurch **gekennzeichnet**, daß sie in geglühtem Zustand vorliegen.

4. Feststoffe nach Anspruch 1 oder 2, dadurch **gekennzeichnet**, daß sie Syntheserohprodukte sind und im dehydratisierten Zustand die Formel $(S)_s : (Me_xAl_yP_z)O_2$ oder $(S)_s : (Me_xAl_uP_vSi_w)O_2$ aufweisen, wobei S für ein organisches Strukturierungsmittel steht und s eine Zahl von 0,06 bis 0,2 und insbesondere von 0,08 bis 0,15 bedeutet und für die molare Menge des Strukturierungsmittels S pro Mol Oxid $(Me_xAl_yP_z)O_2$ oder $(Me_xAl_uP_vSi_w)O_2$ steht.

5. Feststoffe nach Anspruch 4, dadurch **gekennzeichnet**, daß das Strukturierungsmittel S ein Gemisch aus Tetrapropylammonium- und Tetramethylammoniumkationen ist.

6. Feststoffe nach einem der Ansprüche 1 bis 5, dadurch **gekennzeichnet**, daß sie Röntgenbeugungsdiagramme aufweisen, die im wesentlich dem in der Tabelle in der Beschreibung angegebenen Diagramm entsprechen.

7. Verfahren zur Synthese der kristallisierten mikroporösen Feststoffe nach Anspruch 1 oder 2, das darin besteht, daß man ein als Gel bezeichnetes Reaktionsgemisch herstellt, das Wasser, eine Quelle des Elements P, eine Quelle des Elements Al, eine Quelle des Elements Me für die Verbindungen MeAPO und außerdem eine Quelle des Elements Si für die Verbindungen MeAPSO, organische Strukturierungsmittel und ein Mittel zur Einstellung des pH des Gels enthält, wobei die Mengen der Reagentien so eingestellt werden, daß das Gel eine Zusammensetzung erhält, die seine Kristallisation zu MeAPO oder MeAPSO ermöglicht, man das erhaltene Gel auf einer Temperatur unterhalb von 200°C und unter einem Druck, der wenigstens dem Eigendruck des aus diesem Gel gebildeten Gemischs entspricht, während einer Zeitdauer hält, die ausreicht, um die Kristallisation dieses Gels zu einem Precursorstoff des mikroporösen Feststoffs, der in diesem mikroporösen Feststoff besteht, welcher das Strukturierungsmittel in seinen Hohlräumen umschließt, durchzuführen, und man gegebenenfalls den Precursorstoff glüht, um das Strukturierungsmittel zu zerstören und die geglühte Form des mikroporösen Feststoffs zu erzeugen, wobei das Verfahren dadurch **gekennzeichnet** ist, daß die Strukturierungsmittel aus einem Gemisch von Tetrapropylammoniumkationen (TPA) und Tetramethylammoniumkationen (TMA) bei einem Molarverhältnis TPA:TMA von 3 bis 50 bestehen.

8. Verfahren nach Anspruch 7, dadurch **gekennzeichnet**, daß in dem das Strukturierungsmittel bildenden Gemisch das Molarverhältnis der TPA-Kationen zu den TMA-Kationen 8 bis 40 beträgt.

9. Verfahren nach Anspruch 7 oder 8, dadurch **gekennzeichnet**, daß der pH des Reaktionsgemisches oder Gels auf einen Wert zwischen 6 und 8,5 und vorzugsweise zwischen 6,5 und 8 eingestellt wird.

10. Verfahren nach Anspruch 9, dadurch **gekennzeichnet**, daß das Mittel zur Einstellung des pH eine organische Base und insbesondere Tetrapropylammoniumhydroxid (TPAOH) als solches oder in Verbindung mit Tetramethylammoniumhydroxid (TMAOH) ist.

11. Verfahren nach einem der Ansprüche 7 bis 10, dadurch **gekennzeichnet**, daß die Quelle der TPA-Kationen aus Tetrapropylammoniumhydroxid als solchem oder in Verbindung mit Tetrapropylammoniumhalogenid (TPAX) besteht.

12. Verfahren nach einem der Ansprüche 7 bis 11, dadurch **gekennzeichnet**, daß die Quelle der TMA-Kationen TMAOH oder ein Tetramethylammoniumhalogenid (TMAX') oder auch ein Gemisch aus TMAOH und TMAX' ist.

13. Verfahren nach Anspruch 11 und 12, dadurch **gekennzeichnet**, daß die Molarzusammensetzung, bezogen auf $P_2O_5$, und die Molarverhältnisse der Reagentien im Gel Werte innerhalb der nachfolgenden Bereiche liegen:

|  | Breiter Bereich | Bevorzugter Bereich |
|---|---|---|
| $P_2O_5$ | 1 | 1 |
| $Al_2O_3$ | 0,7 - 1,3 | 0,8 - 1,1 |
| MeO | 0,01 - 0,3 | 0,02 - 0,15 |
| $SiO_2$ (für MeAPSO) | 0,01 - 0,6 | 0,05 - 0,4 |
| TPAOH | 1,2 - 2,0 | 1,3 - 1,6 |
| TPAOH + TPAX ($\Sigma$TPA) | 1,4 - 2,7 | 1,6 - 2,5 |
| TMAOH | 0 - 0,3 | 0 - 0,2 |
| TMAOH + TMAX'($\Sigma$TMA) | 0,03 - 0,3 | 0,05 - 0,2 |
| $\Sigma$TPA : $\Sigma$TMA | 3 - 50 | 8 - 40 |
| $H_2O$ | 50 - 120 | 55 - 100 |

14. Verfahren nach Anspruch 13, dadurch **gekennzeichnet**, daß die Herstellung des Gels die folgenden Stufen umfaßt:

- eine erste Mischstufe, die darin besteht, daß man die Quelle des Elements P mit der Quelle des Elements Al und dem Wasser so mischt, daß das Gewichtsverhältnis des Wassers zur Menge der beiden Quellen (P und Al) 0,7 bis 1,3 beträgt;
- einen ersten Abschnitt des Rührens des erhaltenen Gemisches während einer Zeitdauer zwischen 1 Stunde und 30 Stunden und vorzugsweise zwischen 2 und 24 Stunden;
- eine zweite Mischstufe, in deren Verlauf man die gegebenenfalls in einer minimalen Wassermenge gelöste Quelle des Elements Me zusetzt;
- einen zweiten Rührabschnitt während einer Zeitdauer zwischen 0,3 und 4 Stunden und vorzugsweise zwischen 0,5 und 2 Stunden;
- eine dritte Mischstufe, in deren Verlaufe man dem Reaktionsgemisch die Quellen der TPA- und TMA-Kationen und gegebenenfalls noch zusätzlich Wasser sowie zur Herstellung der Verbindungen MeAPSO noch eine Quelle des Elements Si zusetzt, und

-   einen dritten Rührabschnitt während einer Zeitdauer zwischen 4 und 30 Stunden und vorzugsweise zwischen 6 und 24 Stunden.

15. Verfahren nach Anspruch 14, dadurch **gekennzeichnet**, daß das Reaktionsgemisch bzw. Gel nach dem dritten Rührabschnitt einer Ultraschallbehandlung unterworfen wird.

16. Verfahren nach einem der Ansprüche 7 bis 15, dadurch **gekennzeichnet**, daß die Quelle des Elements P aus Phosphorsäure oder einem Phosphorsäureester besteht.

17. Verfahren nach einem der Ansprüche 7 bis 16, dadurch **gekennzeichnet**, daß die Quelle des Elements Al unter Aluminiumoxiden, -oxyhydroxiden und - hydroxiden, Aluminiumsalzen und -alkoxiden ausgewählt wird.

18. Verfahren nach Anspruch 16 und 17, dadurch **gekennzeichnet**, daß man eine für die Elemente P und Al gemeinsame Quelle und insbesondere ein Alumophosphat verwendet.

19. Verfahren nach einem der Ansprüche 7 bis 18, dadurch **gekennzeichnet**, daß die Quelle des Metalls Me unter den Salzen, Hydroxiden, Oxiden und Alkoxiden des Metalls ausgewählt wird.

20. Verfahren nach einem der Ansprüche 7 bis 19, dadurch **gekennzeichnet**, daß die für die Herstellung der Verbindungen MeAPSO verwendete Si-Quelle eine Kieselsäure wie ein Kieselsäuresol, pyrogener Kieselsäure, Fällungskieselsäure oder ein Siliciumalkoxid ist.

21. Verfahren nach einem der Ansprüche 7 bis 10, dadurch **gekennzeichnet**, daß man vor der Kristallisationsstufe dem Gel Kirstallisationskeime zusetzt.

22. Verfahren nach einem der Ansprüche 7 bis 21, dadurch **gekennzeichnet**, daß die Kristallisationstemperatur zwischen 80°C und 200°C und vorzugsweise zwischen 110°C und 150°C ausgewählt wird.

23. Verfahren nach einem der Ansprüche 7 bis 22, dadurch **gekennzeichnet**, daß die Kristallisationsdauer zwischen 12 Stunden und 5 Tagen liegt.

24. Verfahren nach einem der Ansprüche 7 bis 23, dadurch **gekennzeichnet**, daß der kristallisierte Precursorstoff des mikroporösen Feststoffs bei einer Temperatur von über 400°C und vorzugsweise zwischen 450°C und 550°C geglüht wird, wobei das Glühen vorzugsweise in Anwesenheit eines Gases erfolgt.

25. Verfahren nach Anspruch 24, dadurch **gekennzeichnet**, daß das Gas molekularen Sauerstoff enthält.

26. Verwendung der geglühten, kristallisierten mikroporösen Feststoffe nach Anspruch 3 als Adsorbentien zur selektiven Adsorption von Molekülen mit Abmessungen von unter 8 Å als Katalysatoren oder Katalysatorkomponenten bei Reaktionen zur katalytischen Umwandlung organischer Verbindungen und insbesondere von Kohlenwasserstoffverbindungen.